**Europäisches Patentamt**

**European Patent Office**

**Office européen des brevets**

(11) Veröffentlichungsnummer: **0 108 965**
**B1**

(12) # EUROPÄISCHE PATENTSCHRIFT

(45) Veröffentlichungstag der Patentschrift:
04.06.86

(21) Anmeldenummer: 83110600.0

(22) Anmeldetag: 24.10.83

(51) Int. Cl.⁴: **C 08 F 10/00, C 08 F 4/68**

(54) **Verfahren zum Herstellen von Homo- und Copolymerisaten von alpha-Monoolefinen mittels eines Ziegler-Katalysatorsystems.**

(30) Priorität: 13.11.82 DE 3242149

(43) Veröffentlichungstag der Anmeldung:
23.05.84 Patentblatt 84/21

(45) Bekanntmachung des Hinweises auf die Patenterteilung:
04.06.86 Patentblatt 86/23

(84) Benannte Vertragsstaaten:
AT BE DE FR GB IT

(56) Entgegenhaltungen:
DE - A - 2 543 181
DE - A - 2 633 109
GB - A - 1 601 418

(73) Patentinhaber: **BASF Aktiengesellschaft,
Carl-Bosch-Strasse 38, D-6700 Ludwigshafen (DE)**

(72) Erfinder: **Warzelhan, Volker, Dr., Suedtiroler Ring 32,
D-6719 Weisenheim (DE)**
Erfinder: **Ball, Wolfgang, Dr., 0 6,9,
D.6800 Mannheim 1 (DE)**

**Beschreibung**

Die vorliegende Erfindung betrifft ein Verfahren zum Herstellen von Homo- und Copolymerisaten von $C_2$- bis $C_8$-$\alpha$-Monoolefinen, insbesondere von Homo- und Copolymerisaten des Ethylens, durch Polymerisation des bzw. der Monomeren bei Temperaturen von 30 bis 200, insbesondere von 50 bis 125°C und Drücken von 0,1 bis 200, insbesondere von 5 bis 60 bar mittels eines Ziegler-Katalysatorsystems aus

(1) einer Übergangsmetall-Katalysatorkomponente und

(2) einer Organoaluminium-Katalysatorkomponente der Formel

$$AlR_mX_{3-m}$$

worin stehen

X für einen Rest OR, Chlor, Brom bzw. Wasserstoff, vorzugsweise einen Rest OR bzw. Chlor,

R für einen $C_1$- bis $C_{18}$-Kohlenwasserstoffrest, insbesondere einen $C_1$- bis $C_{12}$-Alkylrest, und vorzugsweise einen $C_2$- bis $C_8$-Alkylrest, und

m für eine Zahl von 1 bis 3, vorzugsweise eine Zahl von 2 bis 3,

mit den Massgaben, (i) dass das Atomverhältnis Übergangsmetall aus der Katalysatorkomponente (1) : Aluminium aus Komponente (2) im Bereich von 1 : 0,1 bis 1 : 500, vorzugsweise 1 : 0,2 bis 1 : 200 liegt, sowie (ii) dass als Übergangsmetall-Katalysatorkomponente (1) eingesetzt wird das festphasige Produkt (VI), das erhalten worden ist, indem man

(1.1) zunächst

(1.1.1) einen feinteiligen, porösen, anorganischoxidischen Stoff (I), der einen Teilchendurchmesser von 1 bis 1.000, vorzugsweise 1 bis 400 μm, ein Porenvolumen von 0,3 bis 3, vorzugsweise 1 bis 2,5 cm³/g sowie eine Oberfläche von 100 bis 1.000, vorzugsweise 200 bis 400 m²/g besitzt und die Formel $SiO_2 . aAl_2O_3$ — worin a steht für eine Zahl im Bereich von 0 bis 2, insbesondere 0 bis 0,5 — hat, und

(1.1.2) eine Lösung (II), wie sie sich ergibt beim Zusammenbringen von

(IIa) 100 Gewichtsteilen eines Alkohols der Formel

Z-OH,

worin Z steht für einen gesättigten $C_1$- bis $C_8$-Kohlenwasserstoffrest, insbesondere einen gesättigten $C_1$- bis $C_6$-Kohlenwasserstoffrest, und vorzugsweise einen $C_1$- bis $C_4$-Alkylrest, und

(IIb) 0,01 bis 40, vorzugsweise 1 bis 25 Gewichtsteilen einer Übergangsmetall-Komposition

miteinander in Berührung bringt unter Bildung einer Suspension (III), mit der Massgabe, dass das Gewichtsverhältnis anorganisch-oxidischer Stoff (I) : Übergangsmetall-Komposition (IIb) im Bereich von 1 : 0,01 bis 1 : 1,2, vorzugsweise von 1 : 0,2 bis 1 : 0,8 liegt, die Suspension (III) bei einer Temperatur, die unterhalb von 200, vorzugsweise unterhalb von 160°C und oberhalb des Schmelzpunkts des verwendeten Alkohols (IIa) liegt, bis zur trockenen Konsistenz — Bildung eines festphasigen Zwischenprodukts (IV) — eindampft, und

(1.2) dann

(1.2.1) das aus Stufe (1.1) erhaltene festphasige Zwischenprodukt (IV) und

(1.2.2) eine in einem organischen Lösungsmittel gelöste Aluminiumverbindung (V) der Formel

$$AlR_mX_{3-m}$$

worin stehen

X für einen Rest OR, Chlor, Brom bzw. Wasserstoff, vorzugsweise einen Rest OR bzw. Chlor,

R für einen $C_1$- bis $C_{18}$-Kohlenwasserstoffrest, insbesondere einen $C_1$- bis $C_{12}$-Alkylrest, und vorzugsweise einen $C_2$-bis $C_8$ Alkxlrest, und

m für eine Zahl von 1 bis 3, vorzugsweise eine Zahl von 2 bis 3,

miteinander in Berührung bringt unter Bildung einer Suspension, mit der Massgabe, dass das Gewichtsverhältnis festphasiges Zwischenprodukt (IV) : Aluminiumverbindung (V) im Bereich von 1 : 0,05 bis 1 : 2, vorzugsweise 1 : 0,1 bis 1 : 1 liegt, — wobei das dabei als Suspendiertes resultierende, festphasige Produkt (VI) die Übergangsmetall-Katalysatorkomponente (1) ist.

Polymerisationsverfahren dieser Art sind bekannt, wobei im gegebenen Zusammenhang als repräsentativ das in der GB-PS 1 601 418 beschriebene gelten kann.

Die genannte Verfahrensart hat — ebenso wie in Parallele zu setzende andere Verfahrensarten — zum Kernstück eine in besonderer Weise ausgestaltete Übergangsmetall-Katalysatorkomponente (1).

Die besonderen Ausgestaltungen der Übergangsmetall-Katalysatorkomponente werden bekanntlich vorgenommen, um bestimmte Ziele zu erreichen, wie die folgenden:

(a) Katalysatorsysteme, die eine erhöhte Ausbeute an Polymerisat zu liefern vermögen, nämlich Katalysatorsysteme mit einer erhöhten Produktivität, d.h. Systeme, bei denen die Menge an gebildetem Polymerisat pro Gewichtseinheit der Katalysatorkomponente (1) erhöht ist.

(b) Katalysatorsysteme, durch die weniger bzw. kein Halogen in das Polymerisat eingebracht wird; — was zu erreichen ist, indem

(b₁) die Ausbeute gemäss (a) gesteigert wird und/oder

(b₂) Übergangsmetall-Katalysatorkomponenten eingesetzt werden, die möglichst wenig bzw. kein Halogen enthalten.

(c) Katalysatorsysteme, die ihre positiven Wirkungen auch bei relativ niederen Temperaturen entfalten; — was z.B. für Trockenphasenpolymerisationen von Bedeutung sein kann.

(d) Katalysatorsysteme, durch welche die morphologischen Eigenschaften der Polymerisate in bestimmter Weise beeinflusst werden, etwa im Sinne einer einheitlichen Korngrösse und/oder einer Verminderung des Feinstkornanteils und/oder eines hohen Schüttgewichtes; — was für die technische Beherrschung der Polymerisationssysteme, die Aufarbeitung der Polymerisate und/oder die Verarbeitbarkeit der Polymerisate von Bedeutung sein kann.

(e) Katalysatorsysteme, die einfach und sicher herzustellen und gut handzuhaben sind; — z.B. solche, die sich in (inerten) Kohlenwasserstoff-Hilfsmedien zubereiten lassen.

(f) Katalysatorsysteme, die es ermöglichen, bei Polymerisationen unter Einwirkung von Molekulargewichtsreglern, wie Wasserstoff, mit relativ geringen Mengen an Regler auszukommen; — was z.B. für die Thermodynamik der Verfahrensführung von Bedeutung sein kann.

(g) Katalysatorsysteme, die es erlauben, Polymerisate mit besonders ausgeprägter Spannungsrissbeständigkeit zu erzeugen; — einer Eigenschaft, die z.B. besonders wichtig ist für Flüssigkeits-Behältnisse, namentlich Behältnisse, in denen aggressive Flüssigkeiten aufbewahrt werden sollen.

(h) Katalysatorsysteme, die auf spezielle Polymerisationsverfahren zugeschnitten sind; — etwa solche, die z.B. entweder auf die spezifischen Besonderheiten der Suspensionspolymerisation oder auf die spezifischen Besonderheiten der Trockenphasenpolymerisation abgestimmt sind.

(i) Katalysatorsysteme, mittels derer Polymerisate mit einerseits einer hohen Molmasse (Fertigteilfestigkeit) sowie andererseits einer problemlosen Verarbeitbarkeit erhalten werden können; — d.h. hochmolekulare Polymerisate, die sich auch bei relativ niederen Verarbeitungstemperaturen und/oder durch relativ schwache Verarbeitungskräfte relativ schnell zu einwandfreien Formteilen verarbeiten lassen.

(j) Katalysatorsysteme, die zu Polymerisaten mit einer besonders hohen Steifigkeit führen; — einer Eigenschaft, die für viele Anwendungsgebiete erwünscht ist.

Nach den bisherigen Erfahrungen gibt es unter den mannigfachen Zielen etliche Ziele, die man durch besondere Ausgestaltungen der Übergangsmetall-Katalysatorkomponente nur dann erreichen kann, wenn man andere Ziele zurücksetzt.

Unter diesen Gegebenheiten ist man im allgemeinen bestrebt, solche Ausgestaltungen zu finden, mit denen man nicht nur die gesteckten Ziele erreicht, sondern auch andere erwünschte Ziele möglichst wenig zurücksetzen muss.

In diesem Rahmen liegt auch die Aufgabenstellung, die zur vorliegenden Erfindung geführt hat: eine neue Art Übergangsmetall-Katalysatorkomponente aufzuzeigen, mit der man gegenüber bekannten Übergangsmetall-Katalysatorkomponenten — unter vergleichbarer Zielsetzung — bessere Ergebnisse erreichen kann, insbesondere, was das vorgenannte Ziel (g) betrifft, das möglichst gut erreicht werden soll bei zugleich gutem Erreichen der Ziele (i) und (j).

Es wurde gefunden, dass die gestellte Aufgabe gelöst werden kann mit einer Übergangsmetall-Katalysatorkomponente (1) der eingangs geschilderten Art, in der die zwei Übergangsmetalle Vanadium sowie Zirkon in bestimmter Weise gemeinsam enthalten sind.

Gegenstand der vorliegenden Erfindung ist dementsprechend ein Verfahren zum Herstellen von Homo- und Copolymerisaten von $C_2$- bis $C_8$-$\alpha$-Monoolefinen, insbesondere von Homo- und Copolymerisaten des Ethylens, durch Polymerisation des bzw. der Monomeren bei Temperaturen von 30 bis 200, insbesondere von 50 bis 125°C und Drücken von 0,1 bis 200, insbesondere von 5 bis 60 bar mittels eines Ziegler-Katalysatorsystems aus

(1) einer Übergangsmetall-Katalysatorkomponente und

(2) einer Organoaluminium-Katalysatorkomponente der Formel

$$AlR_mX_{3-m}$$

worin stehen

X für einen Rest OR, Chlor, Brom bzw. Wasserstoff, vorzugsweise einen Rest OR bzw. Chlor,

R für einen $C_1$- bis $C_{18}$-Kohlenwasserstoffrest, insbesondere einen $C_1$- bis $C_{12}$-Alkylrest, und vorzugsweise einen $C_2$- bis $C_8$-Alkylrest, und

m für eine Zahl von 1 bis 3, vorzugsweise eine Zahl von 2 bis 3,

mit den Massgaben, (i) dass das Atomverhältnis Übergangsmetall aus der Katalysatorkomponente (1) : Aluminium aus der Katalysatorkomponente (2) im Bereich von 1 : 0,1 bis 1 : 500, vorzugsweise 1 : 0,2 bis 1 : 200, liegt, sowie (ii) dass als Übergangsmetall-Katalysatorkomponente (1) eingesetzt wird das festphasige Produkt (VI), das erhalten worden ist, indem man

(1.1) zunächst

(1.1.1) einen feinteiligen, porösen, anorganischoxidischen Stoff (I), der einen Teilchendurchmesser von 1 bis 1.000, vorzugsweise 1 bis 400 µm, ein Porenvolumen von 0,3 bis 3, vorzugsweise 1 bis 2,5 cm³/g sowie eine Oberfläche von 100 bis 1.000, vorzugsweise 200 bis 400 m²/g besitzt und die Formel $SiO_2 \cdot aAl_2O_3$ — worin a steht für eine Zahl im Bereich von 0 bis 2, insbesondere 0 bis 0,5 hat, und

(1.1.2) eine Lösung (II), wie sie sich ergibt beim Zusammenbringen von

(IIa)    100 Gewichtsteilen eines Alkohols der Formel

Z-OH,

worin Z steht für einen gesättigten $C_1$- bis $C_8$-Kohlenwasserstoffrest, insbesondere einen gesättigten $C_1$- bis $C_6$-Kohlenwasserstoffrest, und vorzugsweise einen $C_1$- bis $C_4$-Alkylrest, und

(IIb)    0,01 bis 40, vorzugsweise 1 bis 25 Gewichtsteilen einer Übergangsmetall-Komposition

miteinander in Berührung bringt unter Bildung einer Suspension (III), mit der Massgabe, dass das Gewichtsverhältnis anorganisch-oxidischer Stoff (I) : Übergangsmetall-Komposition (IIb) im Bereich von 1 : 0,01 bis 1 : 1,2, vorzugsweise von 1 : 0,2 bis 1 : 0,8 liegt, die Suspension (III) bei einer Temperatur, die unterhalb von 200, vorzugsweise unterhalb von 160 °C und oberhalb des Schmelzpunkts des verwendeten Alkohols (IIa) liegt, bis zur trockenen Konsistenz — Bildung eines festphasigen Zwischenprodukts (IV) eindampft, und

(1.2)    dann

(1.2.1)    das aus Stufe (1.1) erhaltene festphasige Zwischenprodukt (IV) und

(1.2.2.)    eine in einem organischen Lösungsmittel gelöste Aluminiumverbindung (V) der Formel

$AlR_mX_{3-m}$

worin stehen

X    für einen Rest OR, Chlor, Brom bzw. Wasserstoff, vorzugsweise einen Rest OR bzw. Chlor,

R    für einen $C_1$- bis $C_{18}$-Kohlenwasserstoffrest, insbesondere einen $C_1$- bis $C_{12}$-Alkylrest, und vorzugsweise einen $C_2$- bis $C_8$-Alkylrest, und

m    für eine Zahl von 1 bis 3, vorzugsweise eine Zahl von 2 bis 3,

miteinander in Berührung bringt unter Bildung einer Suspension, mit der Massgabe, dass das Gewichtsverhältnis festphasiges Zwischenprodukt (IV) : Aluminiumverbindung (V) im Bereich von 1 : 0,05 bis 1 : 2, vorzugsweise 1 : 0,1 bis 1 : 1 liegt, — wobei das dabei als Suspendiertes resultierende festphasige Produkt (VI) die Übergangsmetall-Katalysatorkomponente (1) ist.

Das erfindungsgemässe Verfahren ist dadurch gekennzeichnet, dass als Übergangsmetall-Katalysatorkomponente (1) eingesetzt wird ein festphasiges Produkt (VI), das erhalten worden ist unter Verwendung einer Übergangsmetall-Komposition (IIb) aus

(IIb1)    100 Molteilen eines Vanadiumtrihalogenids, wobei das Halogen Chlor und/oder Brom sein kann vorzugsweise eines Vanadiumtrichlorids, sowie

(IIb2)    5 bis 400, vorzugsweise 20 bis 200 Molteilen eines Zirkontetrahalogenids, wobei das Halogen Chlor und/oder Brom sein kann, vorzugsweise eines Zirkontetrachlorids.

Zu dem erfindungsgemässen Verfahren ist im einzelnen das Folgende zu bemerken:

Das Polymerisationsverfahren als solches kann — unter Beachtung der kennzeichnenden Besonderheiten — in praktisch allen einschlägig üblichen technologischen Ausgestaltungen durchgeführt werden, etwa als diskontinuierliches, taktweises oder kontinuierliches Verfahren, sei es z.B. als Suspensions-Polymerisationsverfahren, Lösungs-Polymerisationsverfahren, oder Trockenphasen-Polymerisationsverfahren. Die erwähnten technologischen Ausgestaltungen — mit anderen Worten: die technologischen Varianten der Polymerisation von Olefinen nach Ziegler — sind aus der Literatur und Praxis wohlbekannt, so dass sich nähere Ausführungen zu ihnen erübrigen. Zu bemerken ist allenfalls noch, dass die neue Übergangsmetall-Katalysatorkomponente (1) — wie entsprechende bekannte Katalysatorkomponenten — z.B. ausserhalb oder innerhalb des Polymerisationsgefässes mit der Katalysatorkomponente (2) zusammengebracht werden kann; im letztgenannten Fall etwa durch räumlich getrennten Eintrag der Komponenten, die im übrigen in Form einer Suspension [Katalysatorkomponente (1)] bzw. Lösung [Katalysatorkomponente (2)] gehandhabt werden können. Auch ist es z.B. möglich, die Katalysatorkomponente (1) oder die vereinigten Katalysatorkomponenten (1) und (2) in Form von Partikeln einzusetzen, die mit einer Umhüllung aus Wachs versehen sind; — eine Arbeitsweise, die beim Trockenphasen-Polymerisationsverfahren von Vorteil sein kann.

Zu der neuen Übergangsmetall-Katalysatorkomponente (1) selbst ist das Folgende zu sagen:

Ihre Herstellung erfolgt in zwei Stufen, die oben sowie nachstehend mit (1.1) und (1.2) bezeichnet sind.

In Stufe (1.1) bringt man einen feinteiligen anorganischen-oxidischen Stoff (I) der oben definierten Art und eine bestimmte, oben definierte Lösung (II) miteinander in Berührung, wobei sich eine Suspension (III) bildet, die bis zur trockenen Konsistenz — Bildung eines festphasigen Zwischenprodukts (IV) — eingedampft wird. In Stufe (1.2) wird letzteres mit einer Lösung einer bestimmten, oben definierten Aluminiumverbindung (V) in Berührung gebracht unter neuerlicher Bildung einer Suspension; wobei das dabei als Suspendiertes resultierende festphasige Produkt (VI) die neue Katalysatorkomponente (1) ist.

In einzelnen kann man dabei wie folgt verfahren:

*Stufe (1.1)*

Der anorganisch-oxidische Stoff (I) wird in Substanz oder in einem Alkohol suspendiert (zweckmässigerweise einem Alkohol wie er unter (IIa) definiert ist und mit einem Feststoffgehalt der Suspension von nicht weniger als 5 Gewichtsprozent) mit der Lösung (II) vereinigt und danach die gebildete Suspension (III) eingedampft.

Das Herstellen der Lösung (II) selbst kann so erfolgen, wie man üblicherweise Lösungen herstellt und ist insoweit nicht mit Besonderheiten verbunden.

Als abschliessende Massnahme bei Stufe (1.1) wird die Suspension (III) bis zur trockenen Konsistenz eingedampft, wobei das festphasige Zwischenprodukt (IV) erhalten wird. Hierbei kann man — unter Einhaltung der oben gegebenen Temperaturbedingungen — so verfahren, wie man üblicherweise Suspensionen schonend eindampft. Dies bedeutet, dass es im allgemeinen zweckmässig — und bei relativ hohen Alkoholen (IIa) u.U. unerlässlich — ist, das Eindampfen unter mehr oder minder stark erniedrigtem Druck vorzunehmen. Als Faustregel gilt, dass man das Paar Temperatur/Druck so wählen sollte, dass der Eindampfvorgang nach etwa 1 bis 10 Stunden beendet ist. Zweckmässig ist es auch, das Eindampfen unter steter Wahrung der Homogenität des behandelten Gutes vorzunehmen; — wofür sich z.B. Rotationsverdampfer bewährt haben. Eine verbleibende Restmenge an Alkohol, etwa eine durch Komplexbildung gebundene Menge, ist für das festphasige Zwischenprodukt (IV) im allgemeinen ohne Schaden.

*Stufe (1.2)*

Man bereitet zunächst in getrennten Ansätzen eine 0,1- bis 40-, vorzugsweise etwa 20-gewichtsprozentige Suspension des festphasigen Zwischenprodukt (IV) sowie eine 5- bis 80-, vorzugsweise etwa 20-gewichtsprozentige Lösung der Aluminiumverbindung (V), wobei als Suspensions- bzw. Lösungsmittel insbesondere Kohlenwasserstoffe, vor allem relativ leichtsiedende Alkan-Kohlenwasserstoffe, wie Hexane, Heptane oder Benzine, in Betracht kommen. Danach vereinigt man die Suspension und die Lösung in solchen Mengenverhältnissen, dass das gewünschte Gewichtsverhältnis erreicht wird. Zur Vereinigung wird man im allgemeinen die Lösung in die Suspension unter Rühren einbringen, denn diese Verfahrensweise ist praktischer als die — ebenfalls mögliche — umgekehrte. Bei Temperaturen von —25 bis 120°C, insbesondere bei Temperaturen von 25 bis 80°C, ist innerhalb einer Zeitspanne von 15 bis 600 Minuten, insbesondere 60 bis 300 Minuten, die Bildung des — als Suspendiertes vorliegenden — festphasigen Produktes (VI) erfolgt. Dieses kann zweckmässigerweise unmittelbar in Form der erhaltenen Suspension — gegebenenfalls nach einer Wäsche durch Digerieren — als Übergangsmetall-Katalysatorkomponente (1) verwendet werden. Falls gewüscht, ist es aber auch möglich, das festphasige Produkt (VI) zu isolieren und dann erst als Katalysatorkomponente (1) einzusetzen; — wobei sich zum Isolieren z.B. der folgende Weg anbietet: Man trennt das Produkt (VI) von der flüssigen Phase mittels Filtration und wäscht es mit reiner Flüssigkeit (etwa der Art, die man auch als Suspensions- bzw. Lösungsmittel verwendet hatte), worauf man es trocknet, etwa im Vakuum.

Die neuen Übergangsmetall-Katalysatoren (1), d.h. die festphasigen Produkte (VI), lassen sich im Rahmen des eingangs definierten Verfahrens zum Herstellen der dort genannten Polymerisate so einsetzen, wie man üblicherweise die Übergangsmetall-Katalysatorkomponenten bei der Polymerisation von α-Monoolefinen nach Ziegler einsetzt. Insoweit sind also beim erfindungsgemässen Verfahren keine Besonderheiten gegeben, und es kann auf die aus Literatur und Praxis wohlbekannten Einsatzweisen verwiesen werden. — Es ist lediglich noch zu sagen, dass das Verfahren sich vornehmlich zum Herstellen von Homo- und Copolymerisaten des Ethylens eignet und dass im Falle des Herstellens von Copolymerisaten des Ethylens mit höheren α-Monoolefinen (oder auch des Herstellens von Homo- und Copolymerisaten von höheren α-Monoolefinen) vor allem Buten-1 und Hexen-1 als α-Monoolefine in Betracht kommen. Die Regelung der Molekulargewichte der Polymerisate kann in einschlägig üblicher Weise erfolgen, insbesondere mittels Wasserstoff als Regulans.

Was die stoffliche Seite der neuen Übergangsmetall-Katalysatoren (1) betrifft, ist im einzelnen noch das Folgende zu sagen:

Der in Stufe (1.1) einzusetzende anorganisch-oxidische Stoff (I) wird im allgemeinen ein Aluminosilikat oder — insbesondere — ein Siliciumdioxid sein; wichtig ist, dass er die geforderten Eigenschaften besitzt. — Wie sich gezeigt hat, sind besonders gut geeignete Stoffe (I) solche, die gemäss der ersten Stufe (1) des in der GB-PS 1 550 951 beschriebenen Verfahrens erhalten werden, insbesondere dann, wenn dabei von Hydrogelen ausgegangen wird, wie sie nach den Vor-Stufen (A) bis (D) gemäss der gleichen PS anfallen; — d.h. von Hydrogelen, die nach dem in der GB-PS 1 368 711 beschriebenen Verfahren erhältlich sind.

Die einzusetzenden Alkohole (IIa) können z.B. sein: Methanol, Ethanol, Propanole sowie Butanole. Als besonders gut geeignet haben sich erwiesen z.B. Methanol, Ethanol, Isopropanol sowie n-Butanol. Die Alkohole (IIa) können eingesetzt werden in Form von Einzelindividuen sowie Gemischen aus zwei oder mehr Einzelindividuen.

Das einzusetzende Vanadiumtrihalogenid (IIb1) kann ein bei Ziegler-Katalysatorsystemen übliches sein.

Das einzusetzende Zirkontetrahalogenid (IIb2) kann ebenfalls ein bei Ziegler-Katalysatorsystemen übliches sein.

Die in Stufe (1.2) einzusetzende Aluminiumverbindung (V) kann z.B. eine Verbindung sein wie sie repräsentiert wird durch die Formeln $Al(C_2H_5)_3$, $Al(C_2H_5)_2Cl$, $Al(C_2H_5)_2Br$, $Al(C_2H_5)_{1,5}Cl_{1,5}$, $Al(C_2H_5)_{1,5}Br_{1,5}$, $Al(C_2H_5)Cl_2$, $Al(C_2H_5)Br_2$, $Al(C_4H_9)_3$, $Al(C_4H_9)_2Cl$, $Al(C_4H_9)Cl_2$, $Al(C_2H_5)_2H$, $Al(C_4H_9)_2H$, $Al(C_3H_7)_2(OC_3H_7)$ oder $Al(C_2H_5)_{1,5}(OC_2H_5)_{1,5}$ sowie Isoprenylaluminium. Wie sich gezeigt hat, sind besonders gut geeignet Aluminiumverbindungen der Formeln $C_2H_5AlCl_2$, $(C_2H_5)_2AlCl$ sowie Isoprenylaluminium.

Die Aluminiumverbindungen (V) können eingesetzt werden in Form von Einzelindividuen sowie Gemischen aus zwei oder mehr Einzelindividuen.

Die Organoaluminium-Katalysatorkomponente (2) betreffend ist zu sagen, dass sich hierfür die einschlägig üblichen Verbindungen eignen; als geeignete Individuen sind z.B. zu nennen solche der Formeln $Al(C_2H_5)_3$, $Al(i\text{-}C_4H_9)_3$, $Al(n\text{-}C_4H_9)_3$, $Al(C_8H_{17})_3$ sowie Isoprenylaluminium.

Abschliessend ist noch zu bemerken, dass die erfindungsgemässen Übergangsmetall-Katalysatorkomponenten (1), d.h. die Produkte (VI) empfindlich gegen hydrolytische sowie oxidative Einflüsse sind. Insoweit sollte man beim Umgang mit diesen Substanzen also die für Ziegler-Katalysatoren einschlägig üblichen Vorsichtsmassnahmen treffen (z.B. Feuchtigkeitsausschluss, Inertgasatmosphäre).

*Beispiel 1*

Herstellung der Übergangsmetall-Katalysatorkomponente (1):

*Stufe (1.1)*

Es wurde ausgegangen von (1.1.1) 10 Gewichtsteilen Siliciumdioxid (SiO$_2$, Teilchendurchmesser 40-150 µm, Porenvolumen: 1,7 cm$^3$/g, Oberfläche: 430 m$^2$/g) sowie (1.1.2) einer Lösung aus 80 Gewichtsteilen Methanol und 11 Gewichtsteilen einer Übergangsmetall-Komposition, bestehend aus 100 Molteilen Vanadiumtrichlorid sowie 180 Molteilen Zirkontetrachlorid. Diese zwei Komponenten wurden vereinigt und die dabei erhaltene Suspension kurz gerührt. Anschliessend wurde das gebildete festphasige Zwischenprodukt (IV) isoliert durch Abtreiben der flüchtigen Bestandteile in einem Rotationsverdampfer, der bis zu einem Betriebsdruck von 15 mbar und einer Betriebstemperatur von 55°C gebracht wurde.

*Stufe (1.2)*

10 Gewichtsteile des in Stufe (1.1) gewonnenen festphasigen Zwischenprodukts (IV) wurden in 50 Gewichtsteilen n-Heptan suspendiert, worauf diese Suspension mit einer Lösung aus 5 Gewichtsteilen Diethylaluminiumchlorid in 20 Gewichtsteilen n-Heptan versetzt und die daraus resultierende Suspension kurz bei 50°C gerührt wurde. Anschliessend wurde filtriert, drei mal mit n-Heptan gewaschen und im Vakuum getrocknet. Die Analyse des erhaltenen festphasigen Produktes (VI) — d.h. der Katalysatorkomponente (1) — ergab einen Gehalt an Übergangsmetallen von 0,0025 Mol/g.

*Polymerisation:*

26 Gewichtsteile der Übergangsmetall-Katalysatorkomponente (1) (entsprechend 1 Molteil Übergangsmetalle) wurden in 3000 Gewichtsteilen n-Heptan suspendiert. Die so erhaltene Suspension wurde in einen Rührautoklaven gegeben, der mit 70 000 Gewichtsteilen (entsprechend etwa 50% seines Fassungsvermögens) n-Heptan und 120 Gewichtsteilen Triisobutylaluminium (2) (entsprechend 9 Molteilen) beschickt war. Sodann wurde unter Rühren und bei den — jeweils durch Regelung konstant gehaltenen — Parametern: Ethylendruck = 19 bar, Wasserstoffdruck = 10 bar, Temperatur = 95°C, über eine Zeitspanne von 1,5 Stunden polymerisiert, wonach die Polymerisation durch Entspannen des Autoklaven abgebrochen wurde.

Auf diese Weise wird ein Polymerisat erhalten, das eine hohe Steifigkeit sowie eine ausgezeichnete Verarbeitbarkeit bei grosser Fertigteilfestigkeit aufweist und zudem eine ausgeprägte Spannungsrissbeständigkeit hat.

*Beispiel 2*

Herstellung der Übergangsmetall-Katalysatorkomponente (1):

*Stufe (1.1)*

Es wurde ausgegangen von (1.1.1) 10 Gewichtsteilen Siliciumdioxid (SiO$_2$, Teilchendurchmesser 40-150 µm, Porenvolumen: 1,7 cm$^3$/g, Oberfläche: 430 m$^2$/g) sowie (1.1.2) einer Lösung aus 100 Gewichtsteilen Ethanol und 4,5 Gewichtsteilen einer Übergangsmetall-Komposition, bestehend aus 100 Molteilen Vanadiumtrichlorid sowie 83 Molteilen Zirkontetrachlorid. Diese zwei Komponenten wurden vereinigt und die dabei erhaltene Suspension kurz gerührt. Anschliessend wurde das gebildete festphasige Zwischenprodukt (IV) isoliert durch Abtreiben der flüchtigen Bestandteile in einem Rotationsverdampfer, der bis zu einem Betriebsdruck von 10 mbar und einer Betriebstemperatur von 55°C gebracht wurde.

*Stufe (1.2)*

10 Gewichtsteile des in Stufe (1.1) gewonnenen festphasigen Zwischenprodukts (IV) wurden in 50 Gewichtsteilen n-Heptan suspendiert, worauf diese Suspension mit einer Lösung aus 5 Gewichtsteilen Diethylaluminiumchlorid in 20 Gewichtsteilen n-Heptan versetzt und die daraus resultierende Suspension kurz bei 50°C gerührt wurde. Anschliessed wurde filtriert, drei mal mit n-Heptan gewaschen und im Vakuum getrocknet. Die Analyse des erhaltenen festphasigen Produktes (VI) — d.h. der Katalysatorkomponente (1) — ergab einen Gehalt an Übergangsmetallen von 0,0013 Mol/g.

*Polymerisation:*

10 Gewichtsteile der Übergangsmetall-Katalysatorkomponente (1) (entsprechend 1 Molteil Übergangsmetalle) wurden in 3000 Gewichtsteilen n-Heptan suspendiert. Die so erhaltene Suspension wurde in einen Rührautoklaven gegeben der mit 70 000 Gewichtsteilen (entsprechend etwa 50% seines Fassungsvermögens) n-Heptan und 120 Gewichtsteilen Triisobutylaluminium (2) (entsprechend 46 Molteilen) beschickt war. Sodann wurde unter Rühren und bei den — jeweils durch Regelung konstant gehaltenen — Parametern: Ethylendruck = 27 bar, Wasserstoffdruck = 2 bar, Temperatur = 95°C, über eine Zeitspanne von 1,5 Stunden polymerisiert, wonach die Polymerisation durch Entspannen des Autoklaven abgebrochen wurde.

Auch auf diese Weise wird ein Polymerisat erhalten, das eine ausgezeichnete Steifigkeit sowie eine ausgezeichnete Verarbeitbarkeit bei grosser Fertigteilfestigkeit aufweist und zudem eine ausgeprägte Spannungsrissbeständigkeit hat.

*Beispiel 3*

Herstellung der Übergangsmetall-Katalysatorkomponente (1):

*Stufe (1.1)*

Es wurde ausgegangen von (1.1.1) 10 Gewichtsteilen Siliciumdioxid (SiO$_2$, Teilchendurchmesser 40-150 µm, Porenvolumen: 1,7 cm$^3$/g, Oberfläche: 430 m$^2$/g) sowie (1.1.2) einer Lösung aus 80 Gewichtsteilen Methanol und 5,5 Gewichtsteilen einer Übergangsmetall-Komposition, bestehend aus 100 Molteilen Vanadiumtrichlorid sowie 56 Molteilen Zirkontetrachlorid. Diese zwei Komponenten wurden vereinigt und die dabei erhaltene Suspension kurz gerührt. Anschliessend wurde das gebildete festphasige Zwischenprodukt (IV) isoliert durch Abtreiben der flüchtigen Bestandteile in einem Rotationsverdampfter, der bis zu einem Betriebsdruck von 15 mbar und einer Betriebstemperatur von 55°C gebracht wurde.

*Stufe (1.2)*

10 Gewichtsteile des in Stufe (1.1) gewonnenen festphasigen Zwischenprodukts (IV) wurden in 50 Gewichtsteilen n-Heptan suspendiert, worauf diese Suspension mit einer Lösung aus 7 Gewichtsteilen Diethylaluminiumchlorid in 20 Gewichtsteilen n-Heptan versetzt und die daraus resultierende Suspension kurz bei 50°C gerührt wurde. Anschliessend wurde filtriert, drei mal mit n-Heptan gewaschen und im Vakuum getrocknet. Die Analyse des erhaltenen festphasigen Produktes (VI) — d.h. der Katalysatorkomponente (1) — ergab einen Gehalt an Übergangsmetallen von 0,0014 Mol/g.

*Polymerisation:*

8 Gewichtsteile der Übergangsmetall-Katalysatorkomponente (1) (entsprechend 1 Molteil Übergangsmetalle) wurden in 3000 Gewichtsteilen n-Heptan suspendiert. Die so erhaltene Suspension wurde in einen Rührautoklaven gegeben, der mit 70 000 Gewichtsteilen (entsprechend etwa 50% seines Fassungsvermögens) n-Heptan, 3000 Gewichtsteilen Hexen-1 und 120 Gewichtsteilen Triisobutylaluminium (2) (entsprechend 54 Molteilen) beschickt war. Sodann wurde unter Rühren und bei den — jeweils durch Regelung konstant gehaltenen — Parametern: Ethylendruck = 27 bar, Wasserstoffdruck = 2 bar, Temperatur = 95°C, über eine Zeitspanne von 1,5 Stunden polymerisiert, wonach die Polymerisation durch Entspannen des Autoklaven abgebrochen wurde.

Auf diese Weise wird ein Polymerisat erhalten, das eine relativ hohe Steifigkeit sowie eine ausgezeichnete Verarbeitbarkeit bei grosser Fertigteilfestigkeit aufweist und zudem eine besonders ausgeprägte Spannungsrissbeständigkeit hat.

**Patentanspruch**

Verfahren zum Herstellen von Homo- und Copolymerisaten von $C_2$- bis $C_8$-α-Monoolefinen durch Polymerisation des bzw. der Monomeren bei Temperaturen von 30 bis 200°C und Drücken von 0,1 bis 200 bar mittels eines Ziegler-Katalysatorsystems aus

(1) einer Übergangsmetall-Katalysatorkomponente und

(2) einer Organoaluminium-Katalysatorkomponente der Formel

$$AlR_mX_{3-m}$$

worin stehen

X für einen Rest OR, Chlor, Brom bzw. Wasserstoff,

R für einen $C_1$- bis $C_{18}$-Kohlenwasserstoffrest, und

m für eine Zahl von 1 bis 3,

mit den Massgaben, (i) dass das Atomverhältnis Übergangsmetall aus der Katalysatorkomponente (1) : Aluminium aus der Katalysatorkomponente (2) im Bereich von 1 : 0,1 bis 1 : 500 liegt, sowie (ii) dass als Übergangsmetall-Katalysatorkomponente (1) eingesetzt wird das festphasige Produkt (VI), das erhalten worden ist, indem man

(1.1) zunächst

(1.1.1) einen feinteiligen, porösen, anorganischoxidischen Stoff (I), der einen Teilchendurchmesser von 1 bis 1.000 μm, ein Porenvolumen von 0,3 bis 3 $cm^3$/g sowie eine Oberfläche von 100 bis 1.000 $m^2$/g besitzt und die Formel $SiO_2 . aAl_2O_3$ — worin a steht für eine Zahl im Bereich von 0 bis 2 — hat, und

(1.1.2) eine Lösung (II), wie sie sich ergibt beim Zusammenbringen von

(IIa) 100 Gewichtsteilen eines Alkohols der Formel

Z-OH,

worin Z steht für einen gesättigten $C_1$- bis $C_8$-Kohlenwasserstoffrest, und

(IIb) 0,01 bis 40 Gewichtsteilen einer Übergangsmetall-Komposition

miteinander in Berührung bringt unter Bildung einer Suspension (III), mit der Massgabe, dass das Gewichtsverhältnis anorganisch-oxidischer Stoff (I) : Übergangsmetall-Komposition (IIb) im Bereich von 1 : 0,01 bis 1 : 1,2 liegt, die Suspension (III) bei einer Temperatur, die unterhalb von 200°C und oberhalb des Schmelzpunkts des verwendeten Alkohols (IIa) liegt, bis zur trockenen Konsistenz — Bildung eines festphasigen Zwischenprodukts (IV) — eingedampft, und

(1.2) dann

(1.2.1) das aus Stufe (1.1) erhaltene festphasige Zwischenprodukt (IV) und

(1.2.2) eine in einem organischem Lösungsmittel gelöste Aluminiumverbindung (V) der Formel

$$AlR_mX_{3-m}$$

worin stehen

X für einen Rest OR, Chlor, Brom bzw. Wasserstoff,

R für einen $C_1$- bis $C_{18}$-Kohlenwasserstoffrest, und

m für eine Zahl von 1 bis 3,

miteinander in Berührung bringt unter Bildung einer Suspension, mit der Massgabe, dass das Gewichtsverhältnis festphasiges Zwischenprodukt (IV) : Aluminiumverbindung (V) im Bereich von 1 : 0,05 bis 1 : 2 liegt, — wobei das als Suspendiertes resultierende festphasige Produkt (VI) die Übergangsmetall-Katalysatorkomponente (1) ist, dadurch gekennzeichnet, dass als Übergangsmetall-Katalysator-Komponente (1) eingesetzt wird ein festphasiges Produkt (VI), das erhalten worden ist unter Verwendung einer Übergangsmetall-Komposition (IIb) aus

(IIb1)   100 Molteilen eines Vanadiumtrihalogenids, wobei das Halogen Chlor und/oder Brom sein kann, sowie

(IIb2)   5 bis 400 Molteilen eines Zirkontetrahalogenids, wobei das Halogen Chlor und/oder Brom sein kann.


**Claim**

A process for the preparation of homopolymers and copolymers of $C_2$-$C_8$-α-monoolefins by polymerization of the monomer or monomers at from 30 to 200°C, and under a pressure of from 0.1 to 200 bar, using a Ziegler catalyst system comprising

(1)   a transition metal catalyst component, and

(2)   an organoaluminum catalyst component of the formula

$AlR_mX_{3-m}$

where

X   is a radical OR, chlorine, bromine or hydrogen,

R   is a $C_1$-$C_{18}$-hydrocarbon radical, and

m   is a number from 1 to 3,

with the provisos (i) that the atomic ratio of the transition metal from the catalyst component (1) to aluminum from catalyst component (2) is from 1 : 0.1 to 1 : 500, and (ii) that the transition metal catalyst component (1) used is a solid-phase product (VI), obtained by a method in which

(1.1)   first

(1.1.1)   a finely divided, porous, inorganic oxidic substance (I), which has a particle diameter of from 1 to 1,000 μm, a pore volume of from 0.3 to 3 cm³/g and a specific surface area of from 100 to 1,000 m²/g and is of the formula $SiO_2 . aAl_2O_3$ where a is a number from 0 to 2, and

(1.1.2)   a solution (II), as obtained on combining

(IIa)   100 parts by weight of an alcohol of the formula

Z-OH

where Z is a saturated $C_1$-$C_8$-hydrocarbon radical, and

(IIb)   from 0.01 to 40 parts by weight of a transition metal composition,

are brought into contact with one another to form a suspension (III), with the proviso that the weight ratio of inorganic oxidic substance (I) to transition metal composition (II) is from 1 : 0.01 to 1 : 1.2, the suspension (III) is evaporated to dryness at below 200°C, and above the melting point of the alcohol (IIa) used, a solid-phase intermediate (IV) being formed, and

(1.2)   thereafter

(1.2.1)   the solid-phase intermediate (IV) obtained from stage (1.1), and

(1.2.2)   a solution, in an organic solvent, of an aluminum compound (V) of the formula

$AlR_mX_{3-m}$

where

X   is a radical OR, chlorine, bromine or hydrogen,

R   is a $C_1$-$C_{18}$-hydrocarbon radical, and

m   is a number from 1 to 3,

are brought into contact with one another to form a suspension, with the proviso that the weight ratio of the solid-phase intermediate (IV) to the aluminum compound (V) is from 1 : 0.05 to 1 : 2, and the resulting suspended solid-phase product (VI) is the transition metal catalyst component (1),

wherein the transition metal catalyst component (1) employed is a solid-phase product (VI) obtained using a transition metal composition (IIb) comprising

(IIb1)   100 molar parts of a vanadium trihalide in which the halogen can be chlorine and/or bromine, and

(IIb2)   from 5 to 400 molar parts of a zirconium tetrahalide in which the halogen can be chlorine and/or bromine.


**Revendication**

Procédé de préparation d'homo- et de copolymères d'αmonooléfines en $C_2$ à $C_8$ par polymérisation du ou des monomères à des températures de 30 à 200°C et des pressions de 0,1 à 200 bar, au moyen d'un système catalyseur du type Ziegler formé

(1)   d'un composant de catalyseur à base de métal de transition et

(2)   d'un composant de catalyseur organo-aluminique de formule

$AlR_mX_{3-m}$

dans laquelle

X   est mis pour un radical OR, un atome de chlore, de brome ou d'hydrogène,

R   est mis pour un radical hydrocarboné en $C_1$ à $C_{18}$ et

m   est mis pour un nombre de 1 à 3,

avec ces conditions que: (i) le rapport atomique du métal de transition du composant de catalyseur (1) à l'aluminium du composant de catalyseur (2) se situe dans la gamme de 1 : 0,1 à 1 : 500 et (ii) il soit utilisé, comme composant de catalyseur à base de métal de transition (1), le produit en phase solide (VI) qui a été obtenu

(1.1)  tout d'abord en mettant en contact mutuel

(1.1.1)  une substance oxyde inorganique poreuse, finement divisée (I) qui présente un diamètre de particules de 1 à 1000 µm, un volume de pores de 0,3 à 3 cm$^3$/g, ainsi qu'une surface de 100 à 1000 m$^2$/g et qui répond à la formule SiO$_2$ . aAl$_2$O$_3$ — dans laquelle a est mis pour un nombre dans la gamme de 0 à 2 — et

(1.1.2)  une solution (II) résultant de la mise en présence de

(IIa)  100 parties en poids d'un alcool de formule

Z-OH,

dans laquelle Z est mis pour un radical hydrocarboné en C$_1$ à C$_8$ saturé, et

(IIb)  0,01 à 40 parties en poids d'une composition de métal de transition,

pour former une suspension (III), avec cette condition que le rapport pondéral de la substance oxyde inorganique (I) à la composition de métaux de transition (IIb) se situe dans la gamme de 1 : 0,01 à 1 : 1,2, et en évaporant la suspension (III) à une température qui se situe au-dessous de 200°C et au-dessus du point de fusion de l'alcool (IIa) utilisé, jusqu'à la consistance sèche — formation d'un produit intermédiaire en phase solide (IV) —

(1.2)  puis en mettant en contact mutuel

(1.2.1)  le produit intermédiaire en phase solide (IV) obtenu dans le stade (1.1) et

(1.2.2)  un composé d'aluminium (V) dissous dans un solvant organique et répondant à la formule

AlR$_m$X$_{3-m}$

dans laquelle

X  est mis pour un radical OR, un atome de chlore, de brome ou d'hydrogène,

R  est mis pour un radical hydrocarboné en C$_1$ à C$_{18}$ et

m  est mis pour un nombre de 1 à 3,

pour former une suspension, avec cette condition que le rapport pondéral du produit intermédiaire en phase solide (IV) au composé d'aluminium (V) se situe dans la gamme de 1 : 0,05 à 1 : 2 — le produit en phase solide (VI) qui en résulte en tant que matière en suspension étant le composant de catalyseur à base de métal de transition (1),

caractérisé en ce qu'il est utilisé, en tant que composant de catalyseur à base de métal de transition (1), un produit en phase solide (IV) qui a été obtenu en utilisant une composition de métaux de transition (IIb) formée de:

(IIb1)  100 parties molaires d'un trihalogénure de vanadium, l'halogène pouvant être le chlore et/ou le brome, et de

(IIb2)  5 à 400 parties molaires d'un tétrahalogénure de zirconium, l'halogène pouvant être le chlore et/ou le brome.